Europäisches Patentamt

European Patent Office

Office européen des brevets

(19)

(11) **EP 0 883 795 B1**

(12) **EUROPÄISCHE PATENTSCHRIFT**

(45) Veröffentlichungstag und Bekanntmachung des Hinweises auf die Patenterteilung:
**08.01.2003   Patentblatt 2003/02**

(51) Int Cl.7: **G01C 19/56**

(21) Anmeldenummer: **97911129.1**

(22) Anmeldetag: **02.10.1997**

(86) Internationale Anmeldenummer:
**PCT/DE97/02266**

(87) Internationale Veröffentlichungsnummer:
**WO 98/027403 (25.06.1998 Gazette 1998/25)**

(54) **VORRICHTUNG ZUR ERMITTLUNG EINER DREHRATE**

DEVICE FOR DETERMINING THE ROTATIONAL SPEED

DISPOSITIF POUR DETERMINER LA VITESSE DE ROTATION

(84) Benannte Vertragsstaaten:
**DE FR GB**

(30) Priorität: **19.12.1996  DE 19653020**

(43) Veröffentlichungstag der Anmeldung:
**16.12.1998   Patentblatt 1998/51**

(73) Patentinhaber: **ROBERT BOSCH GMBH**
**70442 Stuttgart (DE)**

(72) Erfinder:
 • **SCHMID, Eberhard**
  **D-72770 Reutlingen (DE)**

 • **STEINLECHNER, Siegbert**
  **D-71229 Leonberg (DE)**
 • **ARTZNER, Johannes**
  **D-72764 Reutlingen (DE)**
 • **NEUL, Reinhard**
  **D-70567 Stuttgart (DE)**

(56) Entgegenhaltungen:
  **EP-A- 0 638 782        WO-A-96/21138**
  **GB-A- 2 146 193**

## Beschreibung

Stand der Technik

Die Erfindung geht aus von einer Vorrichtung zur Ermittlung einer Drehrate nach der Gattung des Hauptanspruchs.

Die Verwendung von Drehratensensoren, die den Coriolis-Effekt ausnutzen, ist im Zusammenhang mit Systemen zur Fahrdynamik-Regelung bei Kraftfahrzeugen bekannt. Solche Drehratensensoren bestehen üblicherweise aus einer oder mehreren Massen, die durch eine in einer elektrischen Schaltung erzeugten Spannung zu mechanischen Schwingungen mit der Frequenz $f_s$ angeregt werden. Diese mechanischen Schwingungen wirken auf einen oder mehrere Beschleunigungssensoren, die bei einer Drehung des Systems auch die auf die schwingenden Massen wirkende Coriolis-Beschleunigung messen. Aus den Anregungs- und Beschleunigigungssignalen kann mit Hilfe einer geeigneten Auswerteschaltung die Drehrate des Systems bestimmt werden.

Ein zusätzliches elektrisches Testsignal, das auf den oder die Beschleunigungssensoren gegeben wird, kann dazu dienen, eine zusätzliche willkürlich erzeugte Beschleunigung auf den Sensor wirken zu lassen. Damit können beispielsweise Informationen über die Eigenschaften des Beschleunigungssensors und der nachgeschalteten Auswerteschaltungen gewonnen werden. Es ist somit auch möglich, Fehler, insbesondere systematische Fehler zu erkennen. Dies ist besonders wichtig, da Drehratensensoren, die den Coriolis-Effekt auswerten, systematische Fehler aufweisen, deren Auswirkung auf das Meßsignal durch geeignete Wahl der Auswertemethode minimiert werden muß. Solche systematischen Fehler lassen sich in folgende Fehlerarten unterteilen:

a) Der Beschleunigungssensor oder die Beschleunigungssensoren ist bzw. sind nicht nur in Richtung der zu messenden Coriolis-Beschleunigung empfindlich, sondern auch in andere Richtungen.

b) Der mechanische Schwinger, der durch die elektrische Schaltung in Schwingungen versetzt wird, hat ungewollte Schwingungskomponenten in Richtung der Coriolis-Beschleunigung.

c) Es ist ein elektrisches Übersprechen des Schwingungssignals auf das Beschleunigungssignal möglich.

Zur Auswertung der Ausgangssignale von Drehratensensoren werden bisher Schaltungen eingesetzt, die als Analogschaltungen für die Signalverarbeitung ausgelegt sind. Solche Auswerteschaltungen, mit denen aus den Ausgangssignalen eines Drehratensensors die Drehrate ermittelt werden kann und außerdem noch eine Überprüfung der Funktionsfähigkeit des Sensors bzw. der Auswerteschaltung ermöglicht wird, werden in der internationalen Patentanmeldung WO 96/21138 beschrieben.

Die bekannte Vorrichtung zur Ermittlung einer Drehrate umfaßt einen Drehratensensor, der nach dem Prinzip eines resonanten Schwingungsgyrometers arbeitet und mittels einer amplitudengeregelten Oszillatorschleife angeregt wird. Dieser Sensor wird beispielsweise dazu eingesetzt, die Giergeschwindigkeit eines Fahrzeuges zu ermitteln. Dazu wird der Effekt der Coriolis-Beschleunigung ausgewertet, die ein Maß für die aktuelle Giergeschwindigkeit ist. Zur Überprüfung der Funktionsfähigkeit des Sensors bzw. der zugehörigen Elektronik wird zu bestimmten wählbaren Zeiten eine zusätzliche Spannung, beispielsweise als BITE-Funktion, eingespeist und die Reaktion des Systems auf diese zusätzliche Spannung zur Fehlererkennung ausgewertet.

Vorteile der Erfindung

Die erfindungsgemäße Vorrichtung mit den Merkmalen der nebengeordneten Ansprüche 1 oder 4 haben gegenüber der bekannten Vorrichtung den Vorteil, daß eine rein digitale Signalverarbeitung stattfindet, während bei der bekannten Vorrichtung mit einer analogen Schaltung gearbeitet wird. Der Einsatz von adaptiven Methoden der digitalen Signalverarbeitung ermöglicht eine vorteilhafte Systemidentifikation und Systemnachbildung. Sensorfehler lassen sich durch die Adaptionsprozesse erfolgreich kompensieren. Die erfindungsgemäße digitale Auswerteschaltung ist in vorteilhafter Weise voll integrierbar und weist keine Probleme mit Gleichlauf und Drift der einzelnen Komponenten auf. Die Schaltung ist bis auf einen Skalierungsfaktor abgleichfrei.

Erzielt werden diese Vorteile, indem sowohl die Schwingspannung als auch das elektrische Beschleunigungssignal gemeinsam ausgewertet werden, wobei zunächst eine Digitalisierung der Signale erfolgt. Bei einer ersten Auswertemethode werden die digitalisierten Signale einer adaptiven Systemidentifikation unterworfen, wodurch die Übertragungsfunktion des Sensorsystems zwischen dem Schwingungssignal und dem Beschleunigungssignal nachgebildet wird. Mit Hilfe dieser Übertragungsfunktion läßt sich die Drehrate bestimmen. Bei dieser Methode werden durch die Systemidentifikation alle relevanten Einflüsse nachgebildet. Allerdings werden lang anhaltende konstante Drehraten kompensiert.

In einer zweiten Methode, bei der zusätzlich ein die Beschleunigungssensoren anregendes Testsignal $U_T$ verwendet wird, lassen sich auch lang anhaltende konstante Drehraten ermitteln, obwohl gleichzeitig eine schnelle Adaptionsrate möglich ist. Bei dieser Methode wird eine Systemidentifikation der Übertragungsfunktion zwischen dem Testsignal $U_T$ und dem

Beschleunigungssignal $U_2$ durchgeführt, mit deren Hilfe die Drehrate ermittelt wird. Durch die Verwendung des Testsignales lassen sich außerdem in vorteilhafter Weise Fehlfunktionen des Sensors oder der zugeordneten digitalen Auswerteschaltung erkennen.

Weitere Vorteile der Erfindung werden mit Hilfe der in den Unteransprüchen angegebenen Merkmale erzielt.

Zeichnung

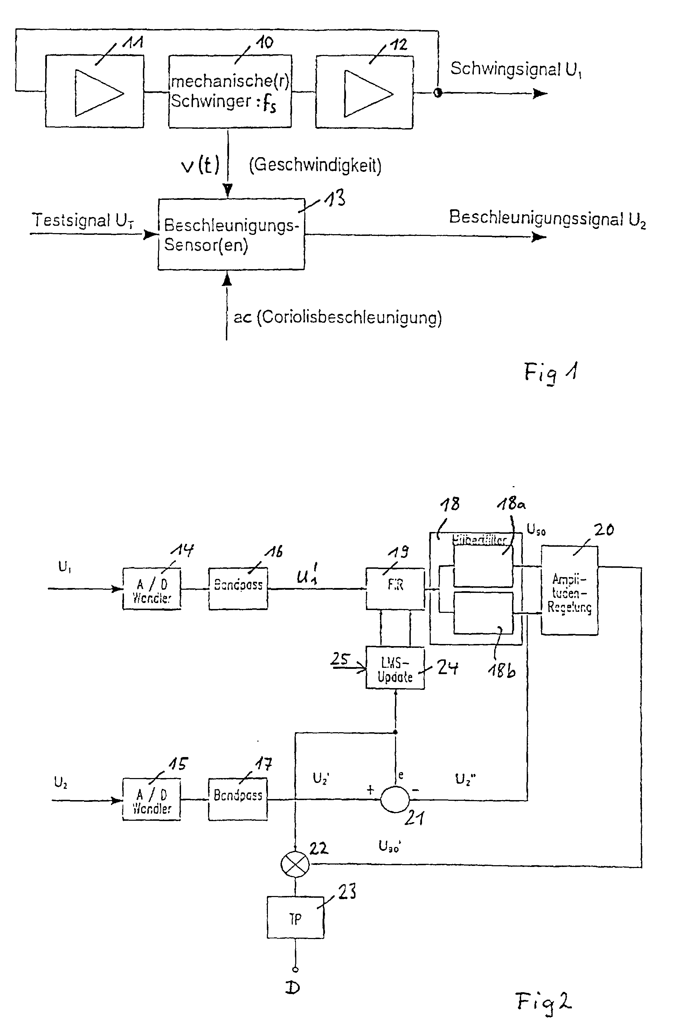

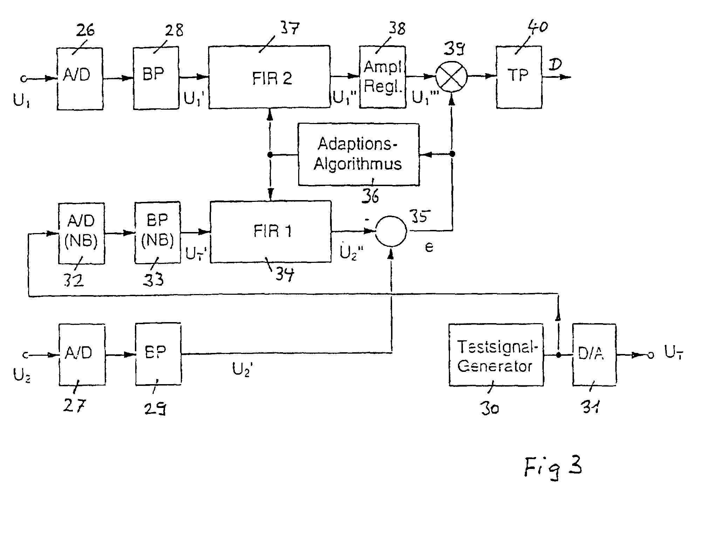

Ausführungsbeispiele der Erfindung sind in der Zeichnung dargestellt und werden in der nachfolgenden Beschreibung näher erläutert. Im einzelnen zeigt Figur 1 ein Blockschaltbild eines Drehratensensors, Figur 2 eine erste Auswerteschaltung und Figur 3 eine zweite Auswerteschaltung für die Ausgangssignale eines Drehratensensors nach Figur 1.

Beschreibung

In dem in Figur 1 gezeigten Blockschaltbild eines Drehratensensors trägt der mechanische Schwinger, beispielsweise ein einseitig eingespannter Hohlzylinder das Bezugszeichen 10. Dieser Schwinger wird durch eine elektrische Schaltung in mechanische Schwingungen versetzt. Die elektrische Schaltung umfaßt die beiden Verstärker 11 und 12. Verstärker 11 ist ein geregelter Verstärker oder besitzt Begrenzereigenschaften. Das zugehörige Ausgangssignal wird als Schwingsignal $U_1$ bezeichnet.

Der mechanische Schwinger 10, der zu Schwingungen mit der Frequenz $f_s$ angeregt wird, beeinflußt den Beschleunigungssensor 13 oder gegebenenfalls die Beschleunigungssensoren, die auf dem mechanischen Schwinger 10 befestigt sind. Im Blockschaltbild nach Figur 1 ist diese Beeinflussung als Geschwindigkeit v(t) dargestellt. Der Beschleunigungssensor 13 bzw. die Beschleunigungssensoren werden weiterhin von der Coriolis-Beschleunigung ac beeinflußt. Zusätzlich kann ein Testsignal $U_T$ zugeführt werden, das eine zusätzliche willkürlich erzeugte Beschleunigung auf den Beschleunigungssensor 13 wirken läßt. Am Ausgang des Beschleunigungssensors 13 stellt sich eine Spannung ein, die als Ausgangsspannung $U_2$ bezeichnet ist und das eigentliche Beschleunigungssignal darstellt.

Aus der Schwingspannung $U_1$ und der Ausgangsspannung $U_2$ kann mit den in den Figuren 2 und 3 dargestellten digitalen Auswerteschaltungen die Drehrate D ermittelt werden. Die in Figur 2 dargestellte Schaltung ermöglicht also aus Anregungsund Beschleunigungssignalen die Drehrate D des Systems zu ermitteln. Die in Figur 3 dargestellte Schaltung verwendet zusätzlich ein Testsignal $U_T$.

In Figur 2 ist eine erste Auswerteschaltung dargestellt, mit der die Spannungen $U_1$ und $U_2$ ausgewertet werden. Dazu wird die Schwingspannung $U_1(t)$,

die proportional zur Momentangeschwindigkeit v(t) der mechanischen Schwingung ist, sowie das elektrische Beschleunigungssignal, also die Ausgangsspannung $U_2(t)$ in jeweils einem Analog-/Digitalwandler 14, 15 in Digitalsignale gewandelt. Gegebenenfalls liegt das Ausgangssignal $U_2$ des Beschleunigungssensors auch bereits digital vor, dies gilt insbesondere dann, wenn die Beschleunigungsinformation mit Hilfe eines sogenannten Sigma-Delta-Verfahrens bereits digital gewonnen wird.

Die digitalisierten Signale werden jeweils mit identischen Bandpässen 16, 17, deren Mittenfrequenz in der Nähe der mechanischen Schwingfrequenz $f_s$ liegt, gefiltert. Daran anschließend wird eine adaptive Systemidentifikation durchgeführt, die beispielsweise unter Verwendung eines LMS- oder RLS-Algorithmus abläuft, der die Übertragungsfunktion $H_{Nb12}(z)$ des Sensorsystems zwischen dem Schwingsignal $U_1(z)$ und dem Beschleunigungssignal $U_2(z)$ nachbildet. Es gilt also:

$$U_2(z)=H_{Nb12}(z)*U_1(z)$$

Die Übertragungsfunktion $H_{nb12}(z)$ bildet alle Störanteile, die bei der Drehrate 0 auftreten und die Schwingfrequenz $f_s$ besitzen, nach. Wird davon ausgegangen, daß der wesentliche Störanteil eine Phasenverschiebung von 90° zur Geschwindigkeit v und damit zur Coriolis-Beschleunigung ac besitzt, läßt sich die im folgenden beschriebene Auswertung durchführen. Dazu wird in die Systemidentifikation ein Zweig eines digitalen 90°-Hilbert-Filters 18 mit einbezogen. Diesem Hilbert-Filter 18 wird die Ausgangsspannung des Bandpasses 16 über ein FIR-Filter 19 zugeführt. Das Hilbert-Filter 18 weist neben dem Zweig 18b, der in die Systemidentifikation mit einbezogen wird, noch einen Zweig 18a auf, dessen Spannung eine Phasenverschiebung von 90° zum ersten Zweig 18b aufweist. Das Ausgangssignal des zweiten Zweiges $U_{90}$ wird in der Amplitudenregelung 20 in seiner Amplitude geregelt.

Für die Durchführung der Amplitudenregelung gibt es zwei Varianten. Bei der ersten Variante wird die Spannung $U_{90}'$ auf konstante Amplitude geregelt, es gilt also:

$$(U_{90}')_{ss}=\text{const.}$$

Diese Art der Regelung ist bei konstanter Amplitude der Geschwindigkeit v bzw. bei konstanter Amplitude der Spannung $U_1$ sinnvoll.

Bei der zweiten Variante der Amplitudenregelung wird die Spannung $U_{90}'$ so geregelt, daß die Amplitude der Spannung $U_{90}$ multipliziert mit der Amplitude der Spannung $U_1$ konstant ist, es gilt also:

$$(U_{90}')_{ss}*(U_1)_{ss}=const.$$

Diese Art der Regelung ist bei variabler Amplitude der Geschwindigkeit v bzw. bei variabler Amplitude der Spannung $U_1$ sinnvoll.

Das analog/digital-gewandelte und bandpaßgefilterte Beschleunigungssignal $U_2'$, das am Ausgang des Bandpasses 17 entsteht, wird ebenso wie das am Ausgang des Hilbert-Filters 18 entstehende Signal $U_2''$ einem Summationspunkt 21 zugeführt. Im Summationspunkt 21 wird das nachgebildete Störsignal $U_2''$ vom Beschleunigungssignal $U_2'$ abgezogen. Das daraus resultierende Signal e stellt das bereinigte Beschleunigungssignal dar, das durch Multiplikation mit dem normierten Signal $U_{90}'$ demoduliert wird. Die Demodulation ist in Figur 2 als Punkt 22 bezeichnet. Das demodulierte Signal wird im nachfolgenden Tiefpaß von der bei der Multiplikation entstehenden doppelten Schwingfrequenz $2f_S$ befreit und die Rauschbandbreite wird reduziert. Am Ausgang des Tiefpasses 23 entsteht ein Signal, das der Drehrate D entspricht.

Das Signal e wird auch als Fehlersignal zur Steuerung der Adaption verwendet. Der Adaptionsvorgang muß deshalb sehr langsam erfolgen, beispielsweise im Minutenbereich, da sonst auch über längere Zeit konstante Drehraten wegkompensiert würden. Die Adaptionsgeschwindigkeit kann vorteilhafterweise von außen mit Hilfe einer Zusatzinformation, beispielsweise "Sensor in Ruhe" gesteuert werden. Es läßt sich somit eine schnelle Adaption in Ruhe und eine langsame Adaption im Normalbetrieb realisieren. In Figur 2 sind die Adaptionsvorgänge in einem Block 24 zusammengefaßt, dem über einen Eingang 25 die Zusatzinformation zugeführt werden kann. Die Adaptionsstufe beeinflußt die Filterstufe 19 über entsprechende Verbindungen.

In Figur 3 ist eine weitere digitale Auswerteschaltung, die eine Signalauswertung nach einer zweiten Methode erlaubt, dargestellt. In dieser Auswerteschaltung wird die Schwingspannung $U_1$ und die Beschleunigungsspannung $U_2$ wiederum zunächst je einem Analog/Digital-Wandler 26, 27 und je einem Bandpaßfilter 28, 29 zugeführt. Es entstehen dann an den Ausgängen der Bandpaßfilter 28, 29 die Spannungen $U_1'$ und $U_2'$.

Zusätzlich wird mit Hilfe eines Testsignalgenerators 30 ein Testsignal $U_{TD}$ erzeugt, das Frequenzkomponenten in der Nähe der Schwingfrequenz des mechanischen Schwingers besitzt und das z. B. sinus- oder rechteckförmig sein kann. Auch ein sogenanntes Pseudo-Binärrauschen (PRBS, PN-Folge) ist als Testsignal geeignet. Dieses Testsignal wird in einem Digital-/Analogwandler 31 gewandelt und als Spannung $U_T$ dem Beschleunigungssensor zugeführt, wie es in Figur 1 dargestellt ist.

Weiterhin wird die Übertragungsfunktion $H_{NbT2}(z)$ vom Eingang $U_T$ zum Ausgang $U_2$ nach Figur 1 identifiziert und nachgebildet. Dazu werden zunächst für das digital vorliegende Testsignal die Veränderungen digital nachgebildet, die das Signal $U_2$ auf dem Signalpfad nach $U_2'$ erfährt. Diese Modellierung erfolgt mit Hilfe der Analog/Digital-Wandler-Nachbildung 32 sowie der Bandpaß-Nachbildung 33. Am Ausgang der Bandpaß-Nachbildung 33 entsteht somit die Spannung $U_T'$.

Wird als Testsignal ein sinusförmiges Testsignal verwendet, genügt für die Nachbildung eine entsprechende Phasenverschiebung. Die Nachbildung der Übertragungsfunktion $H_{NbT2}(z)$ erfolgt über ein adaptives FIR-Filter 34. Es gilt dabei:

$$U_2''\,(z)=U_T'\,(z)*H_{NbT2}(z)$$

Die Spannung $U_2''$ bildet die analog/digital-gewandelte und bandpaßgefilterte Beschleunigungsspannung nach. Sie wird im Summationspunkt 35 von der tatsächlichen Beschleunigungsspannung $U_2'$ abgezogen, wodurch das Fehlersignal e entsteht, das den Adaptionsalgorithmus, der als Block 36 dargestellt ist, steuert. Das Signal e enthält bei eingeschwungener Adaption keine Testsignalanteile mehr, jedoch alle Signalanteile, die von der zu messenden mechanischen Drehrate D verursacht werden.

Die analog/digital gewandelte und bandpaßgefilterte Schwingspannung $U_1'$ wird mit einem zweiten FIR-Filter 37 gefiltert, dessen Koeffizienten eine Kopie der Koeffizienten des Filters 34 sind. Das so gewonnene Signal $U_1''$ ist aufgrund seiner Phasenlage für die Demodulation des im Signal e enthaltenen Drehratensignales geeignet. Zuvor muß allerdings die Spannung $U_2''$, wie bei der ersten Methode beschrieben, normiert werden. Dazu wird es einer Amplitudenregelung 38 zugeführt, an deren Ausgang die Spannung $U_1'''$ entsteht, die im Punkt 39 mit dem Signal e multipliziert wird. Nach Multiplikation der Spannung $U_2'''$ mit dem Signal e und anschließender Tiefpaßfilterung im Tiefpaß 40 wird nach der Digital-/Analog-Wandlung im D/A-Wandler 41 das Drehratensignal D erhalten.

**Patentansprüche**

**1.** Vorrichtung zur Ermittlung einer Drehrate, mit einem schwingungsfähigen Körper, der mittels einer in einer elektrischen Schaltung erzeugten Schwingspannung ($U_1$) in konstante Schwingungen versetzt wird, mit wenigstens einem Sensorelement, das auf dem schwingungsfähigen Körper angeordnet ist und eine Ausgangsspannung ($U_2$) abgibt, die ein Maß für die Beschleunigung und damit auch für die Drehrate ist, **dadurch gekennzeichnet, daß** die Schwingspannung ($U_1$), die proportional zur Momentangeschwindigkeit v(t) des schwingungsfähigen Körpers ist, abgegriffen und digitalisiert wird, daß die Ausgangsspannung ($U_2$) digitalisiert wird oder bereits als Digitalsignal erzeugt wird und daß aus den beiden digital vorliegenden Spannungen ($U_1$, $U_2$) die Übertragungsfunktion gebildet wird, die alle Störanteile bei der Drehrate Null nachbildet und Ausgangspunkt für die Drehratenbestimmung ist.

2. Vorrichtung zur Ermittlung einer Drehrate nach Anspruch 1, **dadurch gekennzeichnet, daß** die aufbereitete Schwingspannung ($U_1$) über einen FIR-Filter (19) einem Hilbert-Filter (18) zugeführt, dessen einer Zweig eine Ausgangsspannung ($U_2''$) liefert, die einem nachgebildeten Störsignal entspricht, das in einem Summationspunkt (21) von der digitalisierten und bandpaßgefilterten Spannung ($U_2'$) abgezogen wird, zur Bildung eines Fehlersignales e, das mit einem aus dem zweiten Zweig des Hilbert-Filters gewonnenen amplitudengeregelten Signal multipliziert wird und nach einer Filterung im Tiefpaß (23) die Drehrate liefert.

3. Vorrichtung zur Ermittlung einer Drehrate nach Anspruch 2, **dadurch gekennzeichnet, daß** die Koeffizienten des Filters (19) über eine Adaption (24) eingestellt werden, die vom Fehlersignal e gesteuert wird, wodurch die Eigenschaften des Filters (19) an die Erfordernisse adaptiert werden.

4. Vorrichtung zur Ermittlung einer Drehrate, mit einem schwingungsfähigen Körper, der mittels einer in einer elektrischen Schaltung erzeugten Schwingspannung ($U_1$) in konstante Schwingungen versetzt wird, mit wenigstens einem Sensorelement, das auf dem schwingungsfähigen Körper angeordnet ist und eine Ausgangsspannung ($U_2$) abgibt, die ein Maß für die Beschleunigung und damit auch für die Drehrate ist, **dadurch gekennzeichnet, daß** die Schwingspannung ($U_1$), die proportional zur Momentgeschwindigkeit v(t) des schwingungsfähigen Körpers ist, abgegriffen und digitalisiert wird, daß die Ausgangsspannung ($U_2$) digitalisiert wird oder bereits als Digitalsignal erzeugt wird und daß zusätzlich ein Testsignal ($U_T$) erzeugt wird, das Frequenzkomponenten in der Nähe der Schwingfrequenz des mechanischen Schwingers aufweist und dem Beschleunigungssensor zusätzlich zugeführt wird, daß die durch das Testsignal verursachten Veränderungen digital nachgebildet werden und diese Nachbildung von der tatsächlichen Beschleunigungsspannung abgezogen wird.

5. Vorrichtung zur Ermittlung einer Drehrate nach Anspruch 4, **dadurch gekennzeichnet, daß** die Übertragungsfunktion von Testsignal ($U_T$) zur Ausgangsspannung ($U_2$) identifiziert und nachgebildet wird und bei der Bestimmung der Drehrate berücksichtigt wird.

6. Vorrichtung zur Ermittlung einer Drehrate nach Anspruch 5, **dadurch gekennzeichnet, daß** die digitalisierten und bandpaßgefilterten Spannungen ($U_1'$) und ($U_T'$) je einem adaptiven FIR-Filter (34, 37) zugeführt werden, wobei die Adaption in Abhängigkeit von der digitalisierten und bandpaßgefilterten Beschleunigungsspannung ($U_2''$) und der tatsächlichen Beschleunigungsspannuung ($U_2'$) erfolgt.

7. Vorrichtung zur Ermittlung einer Drehrate nach Anspruch 6, **dadurch gekennzeichnet, daß** die Koeffizienten der identischen FIR-Filter (34 und 37) über einen Adaptionsalgorithmus (36), der vom Fehlersignal e gesteuert wird, so eingestellt werden, daß die FIR-Filter die Übertragungsfunktion von Testsignal ($U_T$) zur Ausgangsspannung ($U_2$) nachbilden.

8. Vorrichtung zur Ermittlung einer Drehrate nach Anspruch 7, **dadurch gekennzeichnet, daß** das digitalisierte und gefilterte Schwingsignal ($U_1''$) in der Amplitude geregelt wird und daß nach der Multiplikation des geregelten Schwingsignals ($U_1'''$) mit dem Fehlersignal e und Tiefpaßfilterung im Tiefpaß (40) das Drehratensignal D entsteht.

9. Vorrichtung zur Ermittlung einer Drehrate nach einem der vorhergehenden Ansprüche, **dadurch gekennzeichnet, daß** die Amplitudenregelung (20) in Figur 2 bzw. (38) in Figur 3 auf eine konstante Amplitude der Spannung ($U_{90}'$) in Figur 2 bzw. der Spannung ($U_1'''$) in Figur 3 regelt.

10. Vorrichtung zur Ermittlung einer Drehrate nach den Ansprüchen 1 bis 8, **dadurch gekennzeichnet, daß** die Amplitudenregelung (20) in Figur 2 bzw. (38) in Figur 3 auf eine Amplitude regelt, die proportional dem Kehrwert der Amplitude der Schwingspannung ($U_1$) ist.

11. Vorrichtung zur Ermittlung einer Drehrate nach einem der vorhergehenden Ansprüche, **dadurch gekennzeichnet, daß** am Ausgang der Auswerteschaltung ein Tiefpaß vorhanden ist, der die höherfrequenten Signalanteile, insbesonders diejenigen mit doppelter Schwingfrequenz ausfiltert.

12. Vorrichtung zur Ermittlung einer Drehrate nach einem der vorhergehenden Ansprüche, **dadurch gekennzeichnet, daß** die Geschwindigkeit der Adaption der FIR-Filter von außen anpaßbar ist.

13. Vorrichtung zur Ermittlung einer Drehrate, nach einem der vorhergehenden Ansprüche, **dadurch gekennzeichnet, daß** die digitale Auswerteschaltung als voll integrierbare Schaltung ausgestaltet ist.

## Claims

1. Device for determining rotational speed, having a vibrating body which is set in constant vibration by means of a vibration voltage ($U_1$) generated in an electric circuit, and having at least one sensor element which is arranged on the vibrating body and outputs an output voltage ($U_2$) which is a measure of the acceleration, and thus also of the rotational speed, **characterized in that** the vibration voltage ($U_1$), which is proportional to the instantaneous speed v(t) of the vibrating body, is tapped and digitized, **in that** the output voltage ($U_2$) is digitized or is already generated as a digital signal, and **in that** the transfer function, which simulates all noise components at zero rotational speed and is the starting point for the determination of rotational speed is formed from the two voltages ($U_1$, $U_2$) present in digital form.

2. Device for determining rotational speed according to Claim 1, **characterized in that** the conditioned vibration voltage ($U_1$) is fed via an FIR filter (19) to a Hilbert filter (18), of which one branch supplies an output voltage ($U_2''$) which corresponds to a simulated noise signal which is subtracted at a summation point (21) on the digitized and bandpass-filtered voltage ($U_2'$) in order to form an error signal e which is multiplied by an amplitude-controlled signal obtained from the second branch of the Hilbert filter and supplies the rotational speed after filtering in the low-pass filter (23).

3. Device for determining rotational speed according to Claim 2, **characterized in that** the coefficients of the filter (19) are set via an adapting unit (24) which is controlled by the error signal e, as a result of which the properties of the filter (19) are adapted to the requirements.

4. Device for determining rotational speed, having a vibrating body which is set in constant vibration by means of a vibration voltage ($U_1$) generated in an electric circuit, and having at least one sensor element which is arranged on the vibrating body and outputs an output voltage ($U_2$) which is a measure of the acceleration, and thus also of the rotational speed, **characterized in that** the vibration voltage ($U_1$), which is proportional to the instantaneous speed v(t) of the vibrating body, is tapped and digitized, **in that** the output voltage ($U_2$) is digitized or is already generated as a digital signal, and **in that**, in addition, a test signal ($U_T$) is generated which has the frequency components in the vicinity of the vibration frequency of the mechanical vibrator and, in addition, is fed to the acceleration sensor such that the changes caused by the test signal are simulated in digital form and this simulation is subtracted from the actual accelerating voltage.

5. Device for determining rotational speed according to Claim 4, **characterized in that** the transfer function from test signal ($U_T$) to output voltage ($U_2$) is identified and simulated and taken into account when determining the rotational speed.

6. Device for determining rotational speed according to Claim 5, **characterized in that** the digitized and bandpass-filtered voltages ($U_1'$) and ($U_T'$) are fed to one adaptive FIR filter (34, 37) each, the adaptation being performed as a function of the digitized and bandpass-filtered accelerating voltage ($U_2''$) and the actual accelerating voltage ($U_2'$).

7. Device for determining rotational speed according to Claim 6, **characterized in that** the coefficients of the identical FIR filters (34 and 37) are set via an adaptation algorithm (36), which is controlled by the error signal e, such that the FIR filters simulate the transfer function from test signal ($U_T$) to output voltage ($U_2$).

8. Device for determining rotational speed according to Claim 7, **characterized in that** the amplitude of the digitized and filtered vibration signal ($U_1''$) is controlled, and **in that** the rotational speed signal D is produced after the multiplication of the controlled vibration signal ($U_1'''$) by the error signal e and low-pass filtering in the low-pass filter (40).

9. Device for determining rotational speed according to one of the preceding claims, **characterized in that** the amplitude control (20) in Figure 2 or (38) in Figure 3 is controlled to a constant amplitude of the voltage ($U_{90}'$) in Figure 2 or of the voltage ($U_{90}'''$) in Figure 3.

10. Device for determining rotational speed according to one of Claims 1 to 8, **characterized in that** the amplitude control (20) in Figure 2 or (38) in Figure 3 is controlled to an amplitude which is proportional to the reciprocal of the amplitude of the vibration voltage ($U_1$).

11. Device for determining rotational speed according to one of the preceding claims, **characterized in that** present at the output of the evaluation circuit is a lowpass filter which filters out the high-frequency signal components, in particular those with double the vibration frequency.

12. Device for determining rotational speed according to one of the preceding claims, **characterized in that** the speed of adaptation of the FIR filters can be adapted from outside.

**13.** Device for determining rotational speed according to one of the preceding claims, **characterized in that** the digital evaluation circuit is configured as a fully integrated circuit.

## Revendications

**1.** Dispositif pour déterminer une vitesse de rotation à l'aide d'un corps susceptible de vibrer, mis en vibration constante à l'aide d'une tension d'oscillations ($U_1$) générée par un circuit électrique, comportant au moins un élément de capteur installé sur le corps susceptible de vibrer et fournissant une tension de sortie ($U_2$) qui est une mesure de l'accélération et ainsi de la vitesse de rotation, **caractérisé en ce qu'**
on détecte et on numérise la tension d'oscillations ($U_1$) proportionnelle à la vitesse instantanée v(t) du corps vibrant,
on numérise la tension de sortie ($U_2$) ou on génère d'emblée un signal numérique, et
à partir des deux tensions ($U_1$, $U_2$) numériques, on forme la fonction de transfert qui copie toutes les composantes perturbatrices pour la vitesse de rotation nulle et constitue le point de départ de la détermination de la vitesse de rotation.

**2.** Dispositif pour déterminer une vitesse de rotation selon la revendication 1, **caractérisé en ce qu'**
on applique la tension d'oscillations ($U_1$) préparée par l'intermédiaire d'un filtre FIR (19) à un filtre de Hilbert (18) dont une branche fournit une tension de sortie ($U_2$") qui correspond au signal perturbateur copié que l'on retranche en un point de sommation (21) de la tension ($U'_2$) numérisée et filtrée par un filtre passe-bande, pour former un signal d'erreur (e) que l'on multiplie par un signal en régulation d'amplitude obtenu à partir de la seconde branche du filtre de Hilbert et qui après filtrage dans un filtre passe-bas (23) donne la vitesse de rotation.

**3.** Dispositif pour déterminer une vitesse de rotation selon la revendication 2, **caractérisé en ce qu'**
on règle les coefficients du filtre (19) par un moyen d'adaptation (24) commandé par un signal d'erreur (e), pour adapter les propriétés du filtre (19) aux conditions existantes.

**4.** Dispositif pour déterminer une vitesse de rotation à l'aide d'un corps susceptible de vibrer, mis en vibrations constantes par une tension d'oscillations ($U_1$) fournie par un circuit électrique, avec au moins un élément de capteur installé sur le corps susceptible de vibrer et fournissant une tension de sortie ($U_2$) qui est une mesure de l'accélération et ainsi également-

ment de la vitesse de rotation, **caractérisé en ce qu'**
on détecte et on numérise la tension oscillante ($U_1$) proportionnelle à la vitesse instantanée v(t) du corps susceptible de vibrer,
on numérise la tension de sortie ($U_2$) ou on la fournit déjà comme signal numérique, et
en plus on génère un signal de test ($U_T$) comportant les composantes de fréquence à proximité de la fréquence d'oscillations de l'oscillateur mécanique et on fournit ce signal en plus au capteur d'accélération,
on copie de manière numérique les modifications produites par le signal de test et on retranche ce signal copié de la tension d'accélération effective.

**5.** Dispositif pour déterminer une vitesse de rotation selon la revendication 4, **caractérisé en ce qu'**
on identifie la fonction de transfert entre le signal de test ($U_T$) et la tension de sortie ($U_2$), et on la copie et on en tient compte pour déterminer la vitesse de rotation.

**6.** Dispositif pour déterminer une vitesse de rotation selon la revendication 5, **caractérisé en ce qu'**
on applique les tensions numérisées et filtrées par un filtre passe-bande ($U_1$') et ($U_T$') chaque fois à un filtre adaptatif FIR (34, 37), l'adaptation se faisant en fonction de la tension d'accélération numérisée et filtrée par un filtre passe-bande ($U_2$") et en fonction de la tension d'accélération effective ($U_2$').

**7.** Dispositif pour déterminer une vitesse de rotation selon la revendication 6, **caractérisé en ce qu'**
on commande les coefficients des filtres identiques FIR (34, 37) par un algorithme d'adaptation (36) commandé par un signal d'erreur (e) en réglant de façon que les filtres FIR copient la fonction de transfert du signal de contrôle ($U_T$) vers la tension de sortie ($U_2$).

**8.** Dispositif pour déterminer une vitesse de rotation selon la revendication 7, **caractérisé en ce qu'**
on régule en amplitude le signal oscillant ($U_1$") numérisé et filtré, et après multiplication du signal oscillant régulé ($U_1$''') avec le signal d'erreur (e) et filtrage dans un filtre passe-bas (40), on obtient le signal de vitesse de rotation (D).

**9.** Dispositif selon l'une quelconque des revendications précédentes, **caractérisé en ce qu'**
on régule l'amplitude (20) selon la figure 2 ou (38) selon la figure 3 sur une amplitude constante de la

tension constante ($U_{90}'$) à la figure 2, ou de la tension ($U_1'''$) à la figure 3.

**10.** Dispositif selon l'une quelconque des revendications 1 à 8,
**caractérisé en ce qu'**
on régule l'amplitude (20) à la figure 2 ou (38) à la figure 3 sur une amplitude proportionnelle à la valeur réciproque de l'amplitude de la tension d'oscillations ($U_1$).

**11.** Dispositif selon l'une quelconque des revendications précédentes,
**caractérisé par**
un filtre passe-bas à la sortie du circuit d'exploitation qui sépare par filtrage les composantes de signal de fréquence élevée en particulier les composantes à fréquence d'oscillations double.

**12.** Dispositif selon l'une quelconque des revendications précédentes,
**caractérisé en ce qu'**
on adapte de l'extérieur la vitesse d'adaptation du filtre FIR.

**13.** Dispositif selon l'une quelconque des revendications précédentes,
**caractérisé en ce que**
le circuit d'exploitation numérique est un circuit totalement intégré.

Fig 1

Fig 2

Fig 3